Europäisches Patentamt

European Patent Office

Office européen des brevets

(19)

(11) **EP 0 760 467 B1**

(12) **EUROPÄISCHE PATENTSCHRIFT**

(45) Veröffentlichungstag und Bekanntmachung des Hinweises auf die Patenterteilung:
**22.10.2003   Patentblatt 2003/43**

(51) Int Cl.[7]: **G01F 23/26**, G01N 27/22

(21) Anmeldenummer: **96112415.3**

(22) Anmeldetag: **01.08.1996**

(54) **Verfahren zur Bestimmung des Phasenteils eines Mediums in offenen und geschlossenen Leitungen**

Method of determining the phase proportion of a medium in open and closed channels

Procédé pour déterminer la proportion d'une phase d'un milieu dans les canaux ouverts ou fermés

(84) Benannte Vertragsstaaten:
**BE CH DE DK ES FR GB IT LI LU NL**

(30) Priorität: **24.08.1995   DE 19531124**

(43) Veröffentlichungstag der Anmeldung:
**05.03.1997   Patentblatt 1997/10**

(73) Patentinhaber: **Krohne AG**
**4019 Basel (CH)**

(72) Erfinder:
• **Poortmann, Boudewijn Jozef**
**3314 GD Dordrecht (NL)**
• **Nijboer, Heerke**
**2992 BT Barendrecht (NL)**
• **van Bekkum, Aart Jan**
**4223 MG Hoornaar (NL)**

(74) Vertreter: **Patentanwälte**
**Gesthuysen, von Rohr, Weidener, Häckel**
**Postfach 10 13 54**
**45013 Essen (DE)**

(56) Entgegenhaltungen:
**EP-A- 0 077 595          EP-A- 0 326 266**
**EP-A- 0 510 774          US-A- 3 777 257**
**US-A- 4 212 202          US-A- 4 589 077**
**US-A- 4 601 201          US-A- 5 042 299**

• **PATENT ABSTRACTS OF JAPAN vol. 017, no. 666 (P-1656), 8.Dezember 1993 & JP-A-05 223605 (AICHI TOKEI DENKI CO LTD), 31.August 1993,**

**Beschreibung**

Die Erfindung betrifft ein Verfahren zur Bestimmung des Phasenanteils eines Mediums in offenen oder geschlossenen Leitungen gemäß Anspruch 1, ein Magnetisch-induktives Volumendurchflußmeßgerät gemäß Anspruch 9 und ein Verfahren zum Betreiben eines magnetisch-induktiven Volumendurchflußmeßgeräts gemäß Anspruch 16.

Aus der EP-A-0 510 774 ist eine Vorrichtung zur Bestimmung von Phasenanteilen nach verschieden Multiphasen-Muster z.B. darunter schichtförmige ("stratified"), grobförmige ("slug"), und blasenförmige ("bubble") bekannt.

Aus der JP-A-6 229 797 ist ein Magnetisch-induktives Volumendurchflußmeßgerät bekannt.

Ferner sind aus der EP - A - 0 514 964 eine Vorrichtung zur Bestimmung des Phasenanteils eines Mediums und ein entsprechendes Verfahren bekannt, wobei um eine Leitung herum vorzugsweise zehn Kondensatorplatten angeordnet, die von einer Steuer- und Auswerteschaltung so angesteuert werden, daß in der Leitung ein umlaufendes elektrisches Feld erzeugt wird. Bei dem bekannten Verfahren wird nach einer ganzzahligen Anzahl von Umläufen des elektrischen Feldes die mittlere Kapazität der Leitung einschließlich des in der Leitung befindlichen Mediums bestimmt. Die Kenntnis der elektrischen Eigenschaften des Mediums vorausgesetzt, kann man nun aus dieser Kapazität die Anteile der flüssigen und der gasförmigen Phase des Mediums errechnen.

Auch die EP - A - 0 547 751 offenbart eine Vorrichtung und ein Verfahren zur Bestimmung des Phasenanteils eines Mediums in offenen und geschlossenen Leitungen. Bei diesem bekannten Verfahren wird der Phasenanteil, ähnlich wie beim magnetisch-induktiven Prinzip zur Volumendurchflußmessung, über ein senkrecht zur Leitung stehendes Magnetfeld und waagerecht an den Seiten der Leitung angeordneten Elektroden bestimmt.

Der Erfindung liegt somit die Aufgabe zugrunde, die gattungsgemäße Vorrichtung zur Bestimmung des Phasenanteils eines Mediums in offenen oder geschlossenen Leitungen derart weiterzubilden, daß unabhängig von der Form des Querschnitts der Leitung gewährleistet ist, daß sich der den Kondensatorplatten zugeordnete Strom proportional zur Höhe des Oberflächenspiegels des Mediums verhält.

Das erfindungsgemäße Volumendurchflußmeßgerät ist besonders vorteilhaft dadurch ausgestaltet, daß die unterste Kondensatorplatte der ersten Kondensatorplattengruppe eine geringere Höhe überdeckt als die jeweiligen übrigen Kondensatorplatten der ersten Kondensatorplattengruppe. Durch diese Maßnahme ist gewährleistet, daß die unterste Kondensatorplatte der ersten Kondensatorplattengruppe schon bei einem niedrigen Oberflächenspiegel des Mediums unterhalb dieses Oberflächenspiegels des Mediums liegt. Somit ist die Normierung der Ströme der darüberliegenden Kondensatorplatten der ersten Kondensatorplattengruppe sichergestellt.

Zum Schutz der Kondensatorplatten vor eventuell chemisch aggressiven Medien ist das erfindungsgemäße Volumendurchflußmeßgerät vorteilhaft dadurch ausgestaltet, daß die Kondensatorplatten zumindest im wesentlichen in eine isolierende Auskleidung der Leitung eingebettet sind. Eine solche Auskleidung ist in der Regel innerhalb der Leitung ohnehin vorgesehen und besteht etwa aus Teflon, PFA, Polyurethan, Gummi oder ähnlichem.

Eine besonders vorteilhafte Ausgestaltung erfährt das erfindungsgemäße Gerät insbesondere beim Einsatz in Verbindung mit dem magnetisch-induktiven Verfahren zur Messung des Volumendurchflusses dadurch, daß jeweils eine in Kontakt mit dem Medium stehende Kondensatorplatte der ersten und zweiten Kondensatorplattengruppe als Elektroden eines magnetisch-induktiven Volumendurchflußmeßgerätes dienen. Durch diese Maßnahme ist gewährleistet, daß keine weiteren Elektroden als Bestandteile eines magnetisch-induktiven Volumendurchflußmeßgerätes in die Leitung eingebracht werden müssen.

Dadurch, daß mindestens zwei, vorzugsweise vier Kondensatorplatten die zweite Kondensatorplattengruppe bilden, ist gewährleistet, daß das erfindungsgemäße Gerät auch mit vertauschten Rollen der ersten und zweiten Kondensatorplattengruppe betreibbar ist, was - da zwei Meßergebnisse für den Phasenanteil des Mediums in der Leitung zur Verfügung stehen - zu einer erhöhten Meßgenauigkeit führt, wenn die Vorrichtung nacheinander mit vertauschten Rollen der Kondensatorplattengruppen betrieben wird. Auch bei einer nicht ganz exakten Ausrichtung der Trennlinie zwischen den Kondensatorplattengruppen auf die Vertikale der Leitung führt die Vertauschung der Rollen der Kondensatorplattengruppen zu einer erhöhten Meßgenauigkeit.

Eine besondere Vereinfachung ergibt sich für die vertauschten Rollen der Kondensatorplattengruppen und im Hinblick auf die geschilderte Maßnahme, bei der die Aufnahme des Stroms von der Steuer- und Auswerteschaltung bei entsprechenden, zu den Kondensatorplatten der ersten Kondensatorplattengruppe geschalteten Kondensatorplatten der zweiten Kondensatorplattengruppe erfolgt, dadurch, daß das erfindungsgemäße Gerät dadurch gekennzeichnet ist, daß die erste und die zweite Kondensatorplattengruppe relativ zur Vertikalen der Leitung symmetrisch aufgebaut sind.

Das Gerät zur Verwirklichung des erfindungsgemäßen Verfahrens eignet sich insbesondere zum Einsatz in Verbindung mit einem Verfahren bzw. einer einem Gerät zur Messung des Volumendurchflusses. Da bekannte Volumendurchflußmeßgeräte, wie etwa magnetisch-induktive Volumendurchflußmeßgeräte oder Ultraschall-Volumendurchflußmeßgeräte, nur die Geschwindigkeit des strömenden Mediums messen, ist es bei diesem Verfahren zur Bestimmung des Volumendurchflusses in nur teilweise mit der flüssigen Phase des strömenden Mediums gefüllten Leitungen notwendig, den Phasenanteil der flüssigen Phase zu bestimmen. Die Bestimmung des Phasenanteils ist, wie beschrieben, mit Hilfe des erfindungsgemäßen Geräts auf besonders vorteilhafte Art und Weise gewährleistet.

Im einzelnen gibt es nun eine Vielzahl von Möglichkeiten, die erfindungsgemäße Vorrichtung auszugestalten und weiterzubilden. Dazu wird verwiesen einerseits auf die zuvor erläuterten, den Patentansprüchen 1 nachgeordneten Patentansprüche, andererseits auf die Beschreibung von bevorzugten Ausführungsbeispielen in Verbindung mit der Zeichnung. In der Zeichnung zeigen

Fig. 1 eine perspektivische Ansicht eines ersten Ausführungsbeispiels eines erfindungsgemäßen Geräts,

Fig. 2 eine perspektivische Ansicht eines zweiten Ausführungsbeispiels eines erfindungsgemäßen Geräts,

Fig. 3 eine perspektivische Ansicht eines dritten Ausführungsbeispiels eines erfindungsgemäßen Geräts,

Fig. 4 eine perspektivische Ansicht des zweiten Ausführungsbeispiels eines erfindungsgemäßen Geräts in Verbindung mit einem magnetisch-induktiven Volumendurchflußmeßgerät und

Fig. 5 eine perspektivische Ansicht des zweiten Ausführungsbeispiels eines erfindungsgemäßen Geräts in Verbindung mit einem Ultraschall-Volumendurchflußmeßgerät.

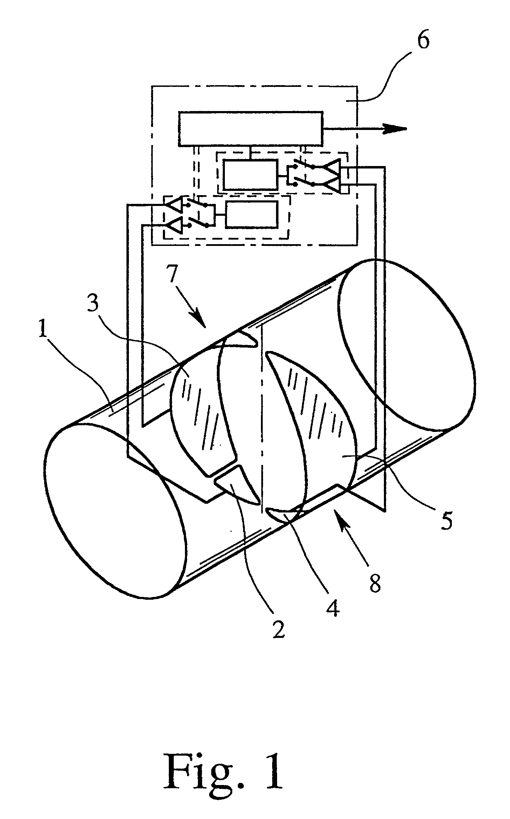

In Fig. 1 ist ein erstes Ausführungsbeispiel eines erfindungsgemäßen Geräts zur Bestimmung des Phasenanteils eines strömenden Mediums in einer geschlossenen Leitung dargestellt. Das in Fig. 1 dargestellte erste Ausführungsbeispiel dieses Geräts weist vier, sich insgesamt im wesentlichen über die gesamte Höhe einer Leitung 1 erstreckende Kondensatorplatten 2, 3, 4, 5 auf. Weiter ist in Fig. 1 eine Steuerund Auswertesteuerung 6 dargestellt, die den Ablauf des Verfahrens vorgibt.

Die in Fig. 1 dargestellten Kondensatorplatten 2, 3 bilden eine erste Kondensatorplattengruppe 7, während die Kondensatorplatten 4, 5 eine zweite Kondensatorplattengruppe 8 bilden. In Fig. 1 ist weiter deutlich zu erkennen, daß die erste Kondensatorplattengruppe 7 und die zweite Kondensatorplattengruppe 8 durch die strichpunktiert dargestellt Vertikale der Leitung 1 voneinander getrennt sind.

Die in Fig. 1 dargestellten untersten Kondensatorplatten 2, 4 überdecken jeweils eine geringere Höhe als jeweils die zweiten Kondensatorplatten 3, 5 der entsprechenden Kondensatorplattengruppen 7, 8. Da die in Fig. 1 dargestellte Leitung 1 einen kreisförmigen Querschnitt aufweist, nimmt die Breite der Kondensatorplatten 2, 3, 4, 5 jeweils von der Horizontale der Leitung 1 sowohl in Richtung auf den Boden der Leitung 1 als auch in Richtung auf die Decke der Leitung 1 ab, so daß sich die Breite der Kondensatorplatten 2, 3, 4, 5 in Abhängigkeit von der Höhe der Leitung 1 stets proportional der Breite der Leitung 1 bei der jeweiligen Höhe verhält.

Da das in Fig. 1 dargestellte Gerät nicht in Verbindung mit einer Vorrichtung zur Bestimmung des Volumendurchflusses kombiniert ist, ist es in diesem Fall zweckmäßig, wenn auch nicht dargestellt, daß die Kondensatorplatten 2, 3, 4, 5 in eine isolierende Auskleidung der Leitung 1 eingebettet sind.

Bei dem in Fig. 1 dargestellten ersten Ausführungsbeispiel eines erfindungsgemäßen Geräts sind die erste Kondensatorplattengruppe 7 und die zweite Kondensatorplattengruppe 8 relativ zur Vertikalen der Leitung 1 symmetrisch aufgebaut.

In der Beschreibung der in den übrigen Figuren dargestellten Ausführungsbeispielen eines erfindungsgemäßen Geräts werden für mit dem ersten Ausführungsbeispiel funktional übereinstimmende Bestandteile der weiteren Ausführungsbeispiele die selben Bezugszeichen wie in Fig. 1 verwendet.

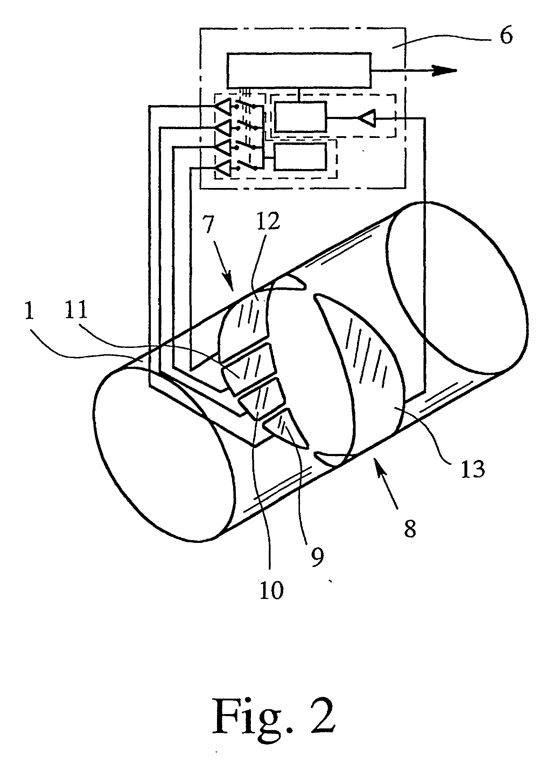

Das in Fig. 2 dargestellte zweite Ausführungsbeispiel eines erfindungsgemäßen Geräts unterscheidet sich von dem in Fig. 1 dargestellten ersten Ausführungsbeispiel dadurch, daß hier vier Kondensatorplatten 9, 10, 11, 12 die erste Kondensatorplattengruppe 7 bilden, während die zweite Kondensatorplattengruppe 8 nur aus einer Kondensatorplatte 13 besteht.

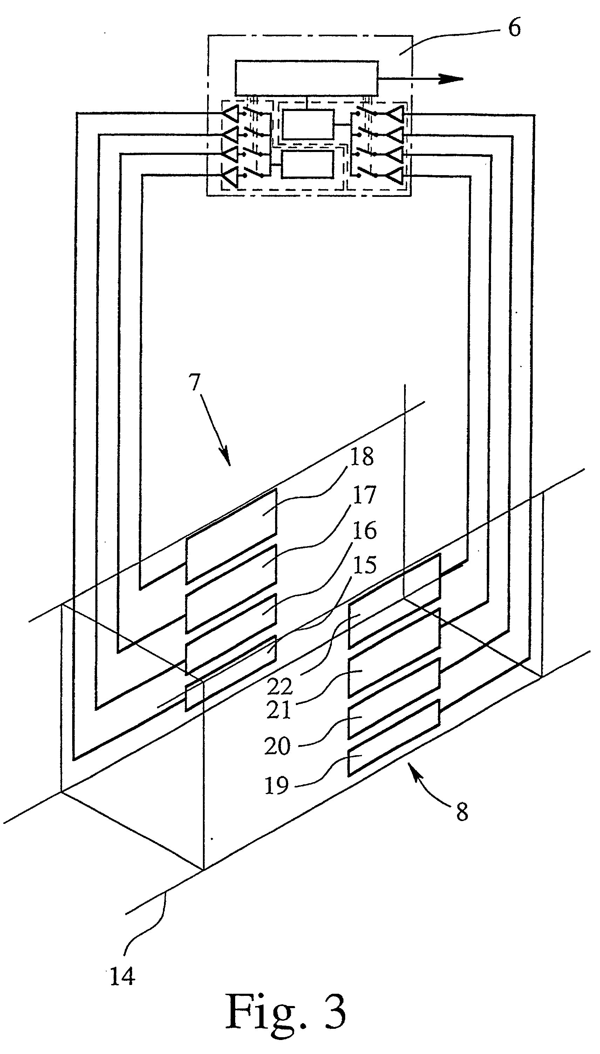

Das in Fig. 3 dargestellte dritte Ausführungsbeispiel eines Geräts zur Verwirklichung des erfindungsgemäßen Verfahrens unterscheidet sich von den zuvor beschriebenen Ausführungsbeispielen einerseits dadurch, daß die Leitung 14 eine offene Leitung ist, und andererseits dadurch, daß jeweils vier Kondensatorplatten 15, 16, 17, 18 die erste Kondensatorplattengruppe 7 und vier weitere Kondensatorplatten 19, 20, 21, 22 die zweite Kondensatorplattengruppe 8 bilden. Da bei dem in Fig. 3 dargestellten dritten Ausführungsbeispiel die Breite der Leitung 14 unabhängig von der Höhe der Leitung 14 ist, verändert sich auch die Breite der Kondensatorplatten 15, 16, 17, 18, 19, 20, 21, 22 nicht in Abhängigkeit von der Höhe.

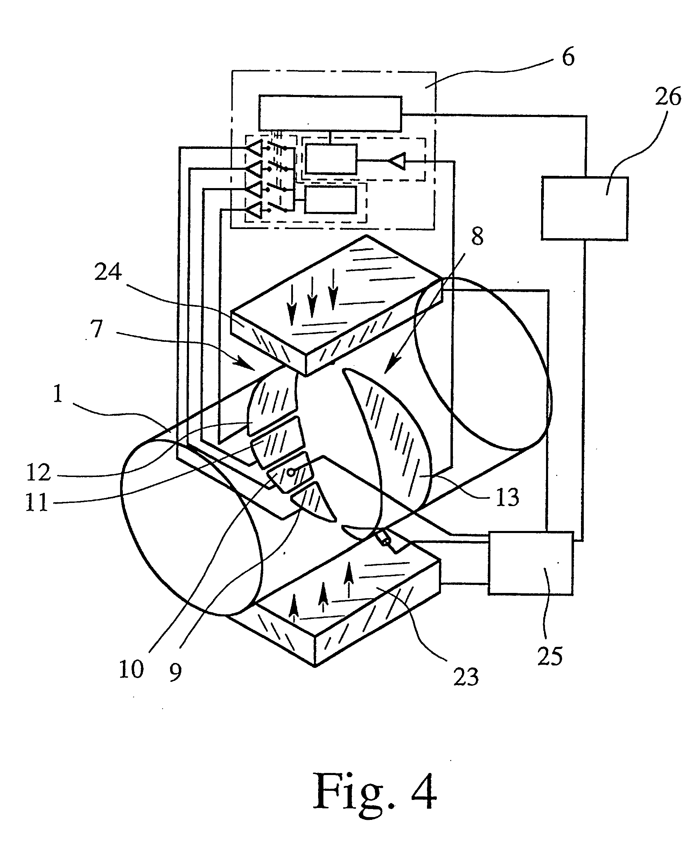

In Fig. 4 ist das in Fig. 2 dargestellte zweite Ausführungsbeispiel eines erfindungsgemäßen Geräts mit einem magnetisch-induktiven Volumendurchflußmeßgerät dargestellt. Das magnetisch-induktive Volumendurchflußmeßgerät weist auf zwei, nur schematisch dargestellte, ein vertikales Magnetfeld senkrecht zur Achse der Leitung 1 aufbauende Feldspulen 23, 24 und eine Verarbeitungsschaltung 25. Als Elektroden dieses magnetisch-induktiven Volumendurchflußmeßgerätes dienen die Kondensatorplatten 10, 13 des Geräts Vorrichtung zur Verwirklichung des erfindungsgemäßen Verfahrens. Um diese Funktion erfüllen zu können, sind bei diesem zweiten Ausführungsbeispiel in Verbindung mit einem magnetisch-induktiven Volumendurchflußmeßgerät zumindest die Kondensatorplatten 10, 13 zumindest teilweise nicht in eine isolierende Auskleidung der Leitung 1 eingebettet, sondern stehen unmittelbar mit dem Medium in der Leitung 1 in Verbindung. Bei dem in Fig. 4 dargestellten magnetisch-induktiven Volumendurchflußmeßgerät steuert die Verarbeitungsschaltung 25 die Feldspulen 23, 24 in bekannter Art und Weise an und wertet ebenfalls in bekannter Art und Weise die Signale der als Elektroden dienenden Kondensatorplatten 10, 13 aus, um so ein Meßergebnis für die Fließgeschwindigkeit des strömenden Mediums zu liefern. In Fig. 4 ist weiter eine zentrale Verarbeitungsschaltung 26 dargestellt, welche anhand des von der Steuer- und Auswerteschaltung 6 gelieferten Meßwertes für den Phasenanteil und des von der Verarbeitungsschaltung 25 gelieferten Meßwertes für die Strömungsgeschwindigkeit den Volumendurchfluß des strömenden Mediums durch die Leitung 1 errechnet.

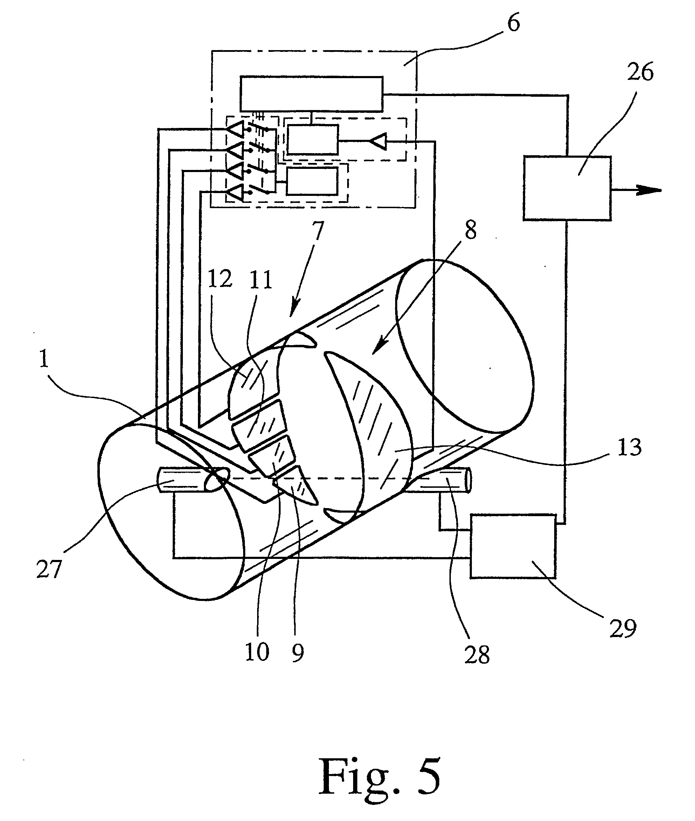

In Fig. 5 ist schließlich das zweite Ausführungsbeispiel eines erfindungsgemäßen Geräts zur in Verbindung mit einem Ultraschall-Volumendurchflußmeßgerät dargestellt. Dieses Ultraschall-Volumendurchflußmeßgerät ist in an sich bekannter Art und Weise völlig unabhängig von der erfindungsgemäßen Vorrichtung aufgebaut. Es sind an zwei gegenüberliegenden Seiten der Leitung 1 zwei relativ zur Strömungsrichtung des Mediums versetzte Ultraschalltransducer 27, 28 aufeinander ausgerichtet angebracht. Die Sende- bzw. Empfangssignale dieser Ultraschalltransducer 27, 28 werden von einer Verarbeitungsschaltung 29 ausgelöst bzw. ausgewertet. Diese Auswertung in an sich bekannter Art und Weise ergibt, wie bei dem magnetisch-induktiven Volumendurchflußmeßgerät, einen Wert für die Geschwindigkeit des strömenden Mediums. Analog zu der in Fig. 4 dargestellten Verbindung eines erfindungsgemäßen Geräts mit einem Gerät zur Volumendurchflußmessung errechnet auch bei dem in Fig. 5 dargestellten Gesamtgerät eine zentrale Verarbeitungsschaltung 26 aus den von der Steuer- und Auswerteschaltung 6 und der Verarbeitungsschaltung 29 gelieferten Meßsignalen den Volumendurchfluß des strömenden Mediums durch die Leitung 1.

Abschließend wird im folgenden das Verfahren zur Bestimmung des Phasenanteils eines Mediums in offenen und geschlossenen Leitungen anhand einer mathematischen Darstellung der dem erfindungsgemäßen Verfahren zu Grunde liegenden physikalischen Prozesse erläutert.

Das Verfahren beruht im wesentlichen auf der Auswertung der Kapazität zwischen einer Kondensatorplatte der ersten Kondensatorplattengruppe und der beispielsweise aus einer einzigen Kondensatorplatte bestehenden zweiten Kondensatorplattengruppe. Die Kapazität zwischen diesen beiden Kondensatorplatten hängt nun ganz wesentlich von der Dielektrizitätskonstanten $\varepsilon$ des zwischen den beiden Kondensatorplatten befindlichen Mediums ab. Dabei ist die Dielektrizitätskonstante des flüssigen Phasenanteils stets wesentlich größer als die Dielektrizitätskonstante $\varepsilon$ des gasförmigen Phasenanteils des Mediums. Bei dem erfindungsgemäßen Verfahren wird die Kapazität zwischen den Kondensatorplatten dadurch bestimmt, daß eine der Kondensatorplatten mit einer Wechselspannung beaufschlagt wird und daß der durch das von dieser Kondensatorplatte ausgehende elektrische Feld an der zweiten Kondensatorplatte influenzierte Strom gemessen wird. Die Frequenz der Wechselspannung wird dabei derart gewählt, daß eine gute Meßgenauigkeit für die Kapazitätsmessung gewährleistet ist, und liegt damit eher im Hochfrequenzbereich. Bei leitfähigen Medien spielt neben der Dielektrizitätskonstanten $\varepsilon$ auch die Leitfähigkeit $\sigma$ des Mediums für den Stromfluß zwischen den Kondensatorplatten eine Rolle. Genauso wie die Dielektrizitätskonstante $\varepsilon$ variiert auch die Leitfähigkeit $\sigma$ sehr stark abhängig vom Medium. Die Leitfähigkeit $\sigma$ kann beispielsweise zwischen 10 und 5000 µS/cm variieren. Somit ist die Messung der Kapazität der Kondensatorplattenanordnung sehr stark von den elektrischen Eigenschaften des Mediums abhängig.

Der tatsächlich zwischen den Kondensatorplatten fließende Strom bei einer anliegenden Wechselspannung ist ganz allgemein von der Impedanz der Anordnung abhängig. Der kapazitive Anteil der Impedanz wird durch die Kapazität der Kondensatorplattenanordnung bestimmt. Die Kapazität C zweier Platten mit der Oberfläche S und einem gegenseitigen Abstand von D beträgt

$$C = \varepsilon \cdot \frac{S}{D} \qquad\qquad \text{Gl. 1.}$$

Im vorliegenden Fall wird der zweite Anteil der Impedanz durch den Widerstand zwischen den beiden Kondensatorplatten bestimmt, der für die der Kapazitätsberechnung zu Grunde gelegten Anordnung folgenden Wert beträgt:

$$R = \frac{1}{\sigma} \cdot \frac{D}{S} \qquad\qquad \text{Gl. 2.}$$

Die Impedanz Z ergibt sich somit für die beschriebene Anordnung wie folgt:

$$Z = \frac{1}{R} + j\omega C, \qquad\qquad\qquad \text{Gl. 3.}$$

$j$ = imaginäre Einheit

$\omega$ = Frequenz der Wechselspannung.

Somit gilt dann für die Beziehung des Stroms zwischen den Kondensatorplatten zu der anliegenden Spannung folgende Gleichung:

$$I = (\sigma + j\,\varepsilon\,\omega)\,\frac{S}{D}\,U \qquad\qquad\qquad \text{Gl. 4.}$$

Die Steuer- und Auswerteschaltung nimmt nacheinander der Strom zwischen den einzelnen Kondensatorplatten der ersten Kondensatorplattengruppe und mindestens einer Kondensatorplatte der zweiten Kondensatorplattengruppe auf. Für die einzelnen gemessenen Ströme ergeben sich also folgende Beziehungen:

$$I_1 = K_1(\sigma + j\varepsilon\,\omega)\cdot f\cdot U.$$

$$I_2 = K_2(\sigma + j\varepsilon\,\omega)\cdot f\cdot U.$$

$$\cdot$$

$$\cdot$$

$$\cdot$$

$$I_r = K_r(\sigma + j\varepsilon\,\omega)\cdot f\cdot U \qquad\qquad\qquad \text{Gl. 5.}$$

In den Gl. 5 beinhalten die Konstanten $K_1$, $K_2$...., $K_r$ die konstanten Eigenschaften des jeweils angesteuerten Kondensatorplattenpaares, wie beispielsweise die geometrische Anordnung, die umgebenden Materialien in der Auskleidung der Leitung usw.. Weiter gibt f in Gl. 5 ein Maß für die Höhe an, bis zu welcher der Oberflächenspiegel des Mediums bei der jeweils angesteuerten Kondensatorplatte der ersten Kondensatorplattengruppe reicht. Berührt der Oberflächenspiegel des Mediums gerade den unteren Rand der jeweiligen Kondensatorplatte der ersten Kondensatorplattengruppe, so beträgt f nahezu Null. Erreicht jedoch der Oberflächenspiegel des Mediums den oberen Rand der jeweiligen Kondensatorplatte der ersten Kondensatorplattengruppe, so nimmt f den Wert 1 an.

Erfindungswesentlich ist nun, daß der Strom der höchsten von dem Oberflächenspiegel des Mediums erreichten Kondensatorplatte der ersten Kondensatorplattengruppe anhand der Ströme der tieferliegenden Kondensatorplatten der ersten Kondensatorplattengruppe normiert wird. Erfolgt die Normierung des Stroms der höchsten von dem Oberflächenspiegel des Mediums erreichten Kondensatorplatte der ersten Kondensatorplattengruppe anhand der Summe der Ströme der tieferliegenden Kondensatorplatten der ersten Kondensatorplattengruppe, so ergibt sich für den normierten Strom $\alpha$ der höchsten, also der beispielsweise der i-ten wie folgt:

$$\alpha_i = \frac{K_i(\sigma + j\varepsilon\omega)\cdot f \cdot U}{\sum\limits_{l=1}^{i-1} K_l(\sigma + j\varepsilon\omega)\cdot U} = f\frac{K_i}{\sum\limits_{l=1}^{i-1} K_l} \qquad\qquad \text{Gl. 6.}$$

An Gl. 6 tritt nun der besondere Vorteil des Verfahrens darin zutage, daß sich die elektrischen Eigenschaften des Mediums bei der Normierung des Stromes gegenseitig wegheben.

Nach dem Verfahren steht also der normierte Strom der höchsten von dem Oberflächenspiegel des Mediums erreichten Kondensatorplatte des ersten Kondensatorplattengruppe als Maß für die Lage des Oberflächenspiegels des Mediums relativ zu dieser höchsten Kondensatorplatte zur Verfügung. Nimmt man nun in einem Prozeß für jede Kondensatorplatte des ersten Kondensatorplattengruppe für jeweils einen Oberflächenspiegels des Mediums am oberen und am unteren Rand der Kondensatorplatte den normierten Strom auf, so läßt sich bei einer geeigneten Ausgestaltung der Breite der Kondensatorplatten in Abhängigkeit von der jeweiligen Höhe der Leitung die Höhe des Oberflächenspiegels des Mediums relativ zu dieser Kondensatorplatte durch einen einfachen Dreisatz berechnen. Aus dieser Höhe ergibt sich selbstverständlich die Höhe des Oberflächenspiegels in der Leitung, da die Position der Kondensatorplatten bekannt ist.

**Patentansprüche**

1. Verfahren zur Bestimmung des Phasenanteils eines Mediums in offenen oder geschlossenen Leitungen, insbesondere zum Einsatz in Verbindung mit einem Verfahren zur Bestimmung des Volumendurchflusses, mit Hilfe einer ersten sich insgesamt im wesentlichen über die gesamte Höhe der Leitung erstreckenden Kondensatorplattengruppe und einer von der erste Kondensatorplattengruppe durch die Vertikale der Leitung getrennten und sich ebenfalls insgesamt im wesentlichen über die gesamte Höhe der Leitung erstreckenden zweiten Kondensatorplattengruppe, wobei die erste Kondensatorplattengruppe mindestens drei Kondensatorplatten aufweist und die zweite Kondensatorplattengruppe mindestens eine Kondensatorplatte aufweist, und mit Hilfe einer Steuer- und Auswerteschaltung, bei welchem von der Steuer- und Auswerteschaltung zwischen zu voneinander verschiedenen Kondensatorplattengruppen gehörenden Kondensatorplatten eine Wechselspannung angelegt wird, **dadurch gekennzeichnet, daß** von der Steuer- und Auswerteschaltung nacheinander der Strom zwischen den einzelnen Kondensatorplatten der ersten Kondensatorplattengruppe und mindestens einer Kondensatorplatte der zweiten Kondensatorplattengruppe aufgenommen wird und von der Steuer- und Auswerteschaltung der Strom der höchsten von dem Oberflächenspiegel des Mediums erreichten Kondensatorplatte der ersten Kondensatorplattengruppe anhand der Summe der Ströme der tieferliegenden Kondensatorplatten der ersten Kondensatorplattengruppe normiert wird, so daß von der Steuer- und Auswerteschaltung der normierte Strom der höchsten von dem Oberflächenspiegel des Mediums erreichten Kondensatorplatte der ersten Kondensatorplattengruppe als Maß für die Lage des Oberflächenspiegel des Mediums relativ zu der höchsten von dem Oberflächenspiegel des Mediums erreichten Kondensatorplatte der ersten Kondensatorplattengruppe ausgewertet wird.

2. Verfahren nach Anspruch 1, **dadurch gekennzeichnet, daß** in einem Eichprozeß für jede Kondensatorplatte der ersten Kondensatorplattengruppe bei einem Oberflächenspiegel des Mediums am oberen Rand der Kondensatorplatte jeweils der normierte Strom aufgenommen wird.

3. Verfahren nach Anspruch 1, **dadurch gekennzeichnet, daß** in dem Eichprozeß für jede Kondensatorplatte der ersten Kondensatorplattengruppe bei einem Oberflächenspiegel des Mediums am unteren Rand der Kondensatorplatte jeweils der normierte Strom aufgenommen wird.

4. Verfahren nach Anspruch 2 oder 3, **dadurch gekennzeichnet, daß** von der Steuerund Auswerteschaltung der normierte Strom für jede Kondensatorplatte der ersten Kondensatorplattengruppe zwischen einem Oberflächenspiegel des Mediums am unteren Rand und einem Oberflächenspiegel des Mediums am oberen Rand der jeweiligen Kondensatorplatte der Höhe des Mediums relativ zu der jeweiligen Kondensatorplatte linear zugeordnet wird.

5. Verfahren nach einem der Ansprüche 1 bis 4, **dadurch gekennzeichnet, daß** die Aufnahme des Stromes von der Steuer- und Auswerteschaltung bei zusammengeschalteten Kondensatorplatten der zweiten Kondensatorplattengruppe erfolgt.

6. Verfahren nach einem der Ansprüche 1 bis 5, **dadurch gekennzeichnet, daß** die Aufnahme des Stromes von der Steuer- und Auswerteschaltung bei entsprechend zu den Kondensatorplatten der ersten Kondensatorplattengruppe geschalteten Kondensatorplatten der zweiten Kondensatorplattengruppe erfolgt.

7. Verfahren nach einem der Ansprüche 1 bis 6, **dadurch gekennzeichnet, daß** bei niedrigem Oberflächenspiegel des Mediums der Volumendurchfluß unmittelbar aus der Höhe des Oberflächenspiegels des Mediums bestimmt wird.

8. Verfahren nach einem der Ansprüche 1 bis 7, **dadurch gekennzeichnet, daß** von der Steuer- und Auswerteschaltung die Leitfähigkeit und/oder die Dielektrizitätskonstante des Mediums bestimmt wird.

9. Magnetisch-induktives Volumendurchflußmeßgerät, mit mindestens drei, sich insgesamt im wesentlichen über die gesamte Höhe der Leitung (1) erstreckenden Kondensatorplatten (9-13) und mit einer Steuer- und Auswerteschaltung (6), wobei mindestens zwei, vorzugsweise vier Kondensatorplatten (9-12) eine erste Kondensatorplattengruppe (7) bilden, mindestens eine Kondensatorplatte (13) eine zweite Kondensatorplattengruppe (8) bildet und die erste Kondensatorplattengruppe (7) und die zweite Kondensatorplattengruppe (8) durch die Vertikale der Leitung (1) voneinander getrennt sind, **dadurch gekennzeichnet, daß** von der Steuer- und Auswerteschaltung (6) zwischen mindestens einer Kondensatorplatte (9-12) der ersten Kondensatorplattengruppe (7) und einer Kondensatorplatte (13) der zweiten Kondensatorplattengruppe (8) eine Wechselspannung anlegbar ist.

10. Magnetisch-induktives Volumendurchflußmeßgerät nach Anspruch 9, **dadurch gekennzeichnet, daß** die unterste Kondensatorplatte (9) der ersten Kondensatorplattengruppe (7) eine geringere Höhe überdeckt als jeweils die übrigen Kondensatorplatten (10-12) der ersten Kondensatorplattengruppe (7).

11. Magnetisch-induktives Volumendurchflußmeßgerät nach Anspruch 9 oder 10, **dadurch gekennzeichnet, daß** sich die Breite der Kondensatorplatten (9-13) in Abhängigkeit von der Höhe der Leitung (1) stets proportional der Breite der Leitung (1) bei der jeweiligen Höhe verhält.

12. Magnetisch-induktives Volumendurchflußmeßgerät nach einem der Ansprüche 9 bis 11, **dadurch gekennzeichnet, daß** die Kondensatorplatten (9-13) zumindest im wesentlichen in eine isolierende Auskleidung der Leitung (1) eingebettet sind.

13. Magnetisch-induktives Volumendurchflußmeßgerät nach Anspruch 12, **dadurch gekennzeichnet, daß** jeweils eine in Kontakt mit dem Medium stehende Kondensatorplatte (9-12, 13) der ersten Kondensatorplattengruppe (7) bzw. der zweiten Kondensatorplattengruppe (8) als Elektroden des magnetisch-induktiven Volumendurchflußmeßgerätes dienen.

14. Magnetisch-induktives Volumendurchflußmeßgerät nach einem der Ansprüche 9 bis 13, **dadurch gekennzeichnet, daß** mindestens zwei, vorzugsweise vier Kondensatorplatten die zweite Kondensatorplattengruppe (8) bilden.

15. Magnetisch-induktives Volumendurchflußmeßgerät nach Anspruch 14, **dadurch gekennzeichnet, daß** die erste Kondensatorplattengruppe (7) und die zweite Kondensatorplattengruppe (8) relativ zur Vertikalen der Leitung (1) symmetrisch aufgebaut sind.

16. Verfahren zum Betreiben eines magnetisch-induktiven Volumendurchflußmeßgeräts, wobei das magnetisch-induktive Volumendurchflußmeßgerät mindestens drei, sich insgesamt im wesentlichen über die gesamte Höhe der Leitung (1) erstreckende Kondensatorplatten (9-13) und eine Steuer- und Auswerteschaltung (6) aufweist, mindestens zwei, vorzugsweise vier Kondensatorplatten (9-12) eine erste Kondensatorplattengruppe (7) bilden, mindestens eine Kondensatorplatte (13) eine zweite Kondensatorplattengruppe (8) bildet und die erste Kondensatorplattengruppe (7) und die zweite Kondensatorplattengruppe (8) durch die Vertikale der Leitung (1) voneinander getrennt sind, **dadurch gekennzeichnet, daß** von der Steuer- und Auswerteschaltung (6) zwischen mindestens einer Kondensatorplatte (9-12) der ersten Kondensatorplattengruppe (7) und einer Kondensatorplatte (13) der zweiten Kondensatorplattengruppe (8) eine Wechselspannung angelegt wird, von der Steuer- und Auswerteschaltung (6) nacheinander der Strom zwischen den einzelnen Kondensatorplatten (9-12) der ersten Kondensatorplattengruppe (7) und mindestens einer Kondensatorplatte (13) der zweiten Kondensatorplattengruppe (8) aufgenommen wird und von der Steuer- und Auswerteschaltung (6) der Strom der höchsten von dem Oberflächenspiegel des Mediums erreichten Kondensatorplatte (10-12) der ersten Kondensatorplattengruppe (7) anhand des Stromes einer tieferliegenden Kondensatorplatte (9-11) der ersten Kondensatorplattengruppe (7) oder der Summe von Strömen der tieferliegenden Kondensatorplatten (9-11) der ersten Kondensatorplattengruppe (7) normiert wird, so daß von der Steuer- und Auswerteschaltung (6) der normierte Strom der höchsten von dem Oberflächenspiegel des Mediums erreichten Kondensatorplatte (10-12) der ersten Kondensatorplattengruppe (7) als Maß für die Lage des Oberflächenspiegels des Mediums relativ zu der höchsten von dem Oberflächenspiegel des Mediums erreichten Kondensatorplatte (10-12) der ersten Kondensatorplattengruppe (7) ausgewertet wird.

## Claims

1. Process for determining the phase portion of a medium in an open or closed pipe, especially for use in connection with a process for determining the volume flow, with the help of a first condenser plate group extending basically over the entire height of the pipe and a second condenser plate group also extending basically over the entire height of the pipe and separated vertically to the pipe by the first condenser plate group, wherein the first condenser plate group has at least three condenser plates and the second condenser plate group has at least one condenser plate and with the help of the control and evaluation circuit, in which the control and evaluation circuit creates an alternating voltage between condenser plates belonging to different condenser plate groups, **characterized in that** the current between the individual condenser plates of the first condenser plate group and at least one condenser plate of the second condenser plate group is recorded by the control and evaluation circuit in sequence, the current of the highest condenser plate reached by the surface level of the medium in the first group of condenser plates is standardized by the control and evaluation circuit using the currents of the lower-lying condenser plate in the first group of condenser plates so that the standardized current from the highest condenser plate reached by the surface level of the medium in the first group of condenser plates is evaluated as a measurement for the position of the surface level of the medium relative to the highest condenser plate reached by the surface level of the medium in the first group of condenser plates.

2. Process according to claim 1, **characterized in that** in a calibration process for each condenser plate in the first group of condenser plates, the standardized current is recorded at a surface level of the medium on the upper edge of the condenser plate.

3. Process according to claim 1, **characterized in that** in the calibration process for each condenser plate in the first group of condenser plates, the standardized current is recorded at a surface level of the medium on the lower edge of the condenser plate.

4. Process according to claim 2 or 3, **characterized by** in that the standardized current for each condenser plate in the first group of condenser plates between a surface level of the medium on the lower edge and a surface level of the medium on the upper edge of the respective condenser plate is assigned linearly to the height of the medium relative to the respective condenser plate by the control and evaluation circuit.

5. Process according to any one of claims 1 to 4, **characterized in that** the current is recorded by the control and evaluation circuit with the condenser plates in the second group of condenser plates switched together.

6. Process according to any one of claims 1 to 5, **characterized in that** the current is recorded by the control and evaluation circuit with the condenser plates in the second group of condenser plates switched corresponding to the condenser plates in the first group of condenser plates.

7. Process according to any one of claims 1 to 6, **characterized in that** the volume flow is determined directly from the height of the surface level of the medium when the surface level of the medium is low.

8. Process according to any one of claims 1 to 7, **characterized in that** the conductivity and/or the dielectric constant of the medium is determined by the control and evaluation circuit.

9. Magnetically inductive volume flow meter having at least three condenser plates (9-13) extending basically over the entire height of the pipe (1) and a control and evaluation circuit (6), wherein at least two, preferably four condenser plates (9-12) form a first condenser plate group, at least one condenser plate (13) forms a second condenser plate group and the first condenser plate group (7) and the second condenser plate group (8) are separated from another vertically in the pipe (1), **characterized in that** an alternative voltage can be applied by the control and evaluation circuit (6) between at least one condenser plate (9-12) of the first condenser plate group (7) and one condenser plate (13) of the second condenser plate group (8).

10. Magnetically deductive volume flow meter according to claim 9, **characterized in that** the lowest condenser plate (9) in the first group of condenser plates (7) covers a lower height than the other condenser plates (10-12) in the first group of condenser plates (7).

11. Magnetically inductive volume flow meter according to claim 9 or 10, **characterized in that** the width of the condenser plates (9-13) is always proportional to the width of the pipe (1) at the respective height, depending on the height of the pipe (1).

12. Magnetically inductive volume flow meter according to any one of claims 9 to 11, **characterized in that** the condenser plates (9-13) are embedded at least basically in an insulating lining of the pipe (1).

13. Magnetically inductive volume flow meter according to claim 12, **characterized in that** one condenser plate (9-12, 13) that is in contact with the medium in the first group of condenser plates (7) or, respectively, the second group of condenser plates (8) serve as electrodes for a magnetically inductive volume flow meter.

**14.** Magnetically inductive volume flow meter according to any one of claims 9 to 13, **characterized in that** at least two and preferably four condenser plates form the second group of condenser plates (8).

**15.** Magnetically inductive volume flow meter according to claim 14, **characterized in that** the first group of condenser plates (7) and the second group of condenser plates (8) are designed symmetrically relative to the vertical axis of the pipe (1).

**16.** Process for operating a magnetically inductive volume flow meter, wherein the magnetically inductive volume flow meter has at least three condenser plates (9-13) extending basically over the entire height of the pipe (1) and a control and evaluation circuit (6), wherein at least two, preferably four condenser plates (9-12) form a first condenser plate group, at least one condenser plate (13) forms a second condenser plate group and the first condenser plate group (7) and the second condenser plate group (8) are separated from another vertically in the pipe (1), **characterized in that** an alternative voltage is applied by the control and evaluation circuit (6) between at least one condenser plate (9-12) of the first condenser plate group (7) and one condenser plate (13) of the second condenser plate group (8), that the current between the individual condenser plates (9-12) of the first condenser plate group (7) and at least one condenser plate (13) of the second condenser plate group (8) is recorded by the control and evaluation circuit in sequence, and the current of the highest condenser plate (10-12) reached by the surface level of the medium in the first group of condenser plates (7) is standardized by the control and evaluation circuit (6) using the currents of the lower-lying condenser plate (9-11) in the first group of condenser plates (7) or the sum of the currents of the lower-lying condenser plates (9-11) of the condenser plate group are standardized so that the standardized current from the highest condenser plate (10-12) reached by the surface level of the medium in the first group of condenser plates (7) is evaluated as a measurement for the position of the surface level of the medium relative to the highest condenser plate(10-12) reached by the surface level of the medium in the first group of condenser plates (7).

**Revendications**

**1.** Procédé de détermination de la proportion de phase d'un milieu dans de conduites ouvertes ou fermées, en particulier pour la mise en oeuvre en liaison avec un procédé de détermination du débit volumique, à l'aide d'un premier groupe de condensateurs s'étendant au total pour l'essentiel sur la hauteur entière de la conduite et d'un deuxième groupe de plaques de condensateur séparées du premier groupe de plaques de condensateur par la verticale de la conduite, et s'étendant également au total pour l'essentiel, sur la hauteur entière de la conduite, le premier groupe de plaques de condensateur présentant au moins trois plaques de condensateur et le deuxième groupe de plaques de condensateur présentant au moins une plaque de condensateur, et à l'aide d'un circuit de commande et d'évaluation, procédé dans lequel une tension alternative est appliquée par le circuit de commande et d'évaluation entre les plaques de condensateur appartenant à des groupes de condensateur différents l'un de l'autre, **caractérisé en ce que** le courant entre les plaques de condensateur individuelles du premier groupe de plaques de condensateur et au moins une plaque de condensateur du deuxième groupe de plaques de condensateur, est enregistré successivement par le circuit de commande et d'évaluation et le courant de la plaque de condensateur la plus haute atteinte par l'interface du milieu, du premier groupe de plaques de condensateur est normé à l'aide de la somme des courants des plaques de condensateur se trouvant plus bas du premier groupe de plaques de condensateur, à l'aide du circuit de commande et d'évaluation, de sorte que le courant normé de la plaque de condensateur la plus haute atteinte par l'interface du milieu, du premier groupe de plaques de condensateur est évalué en tant que mesure de la position de l'interface du milieu par rapport à la plaque de condensateur la plus haute atteinte par l'interface du milieu, du premier groupe de plaques de condensateur, à l'aide du circuit de commande et d'évaluation.

**2.** Procédé selon la revendication 1, **caractérisé en ce que** le courant normé est enregistré à chaque fois dans un processus d'étalonnage pour chaque plaque de condensateur du premier groupe de plaques de condensateur pour une interface du milieu, au niveau du bord supérieur de la plaque de condensateur.

**3.** Procédé selon la revendication 1, **caractérisé en ce que** le courant normé est enregistré à chaque fois dans un processus d'étalonnage pour chaque plaque de condensateur du premier groupe de plaques de condensateur pour une interface du milieu au niveau du bord inférieur de la plaque de condensateur.

4.  Procédé selon la revendication 2 ou 3, **caractérisé en ce qu'**à partir du circuit de commande et d'évaluation, le courant normé pour chaque plaque de condensateur du premier groupe de plaques de condensateur, entre une interface du milieu au niveau du bord inférieur et une interface du milieu au niveau du bord supérieur de la plaque de condensateur respective, est associé linéairement à la hauteur du milieu par rapport à la plaque de condensateur respective.

5.  Procédé selon l'une quelconque des revendications 1 à 4, **caractérisé en ce que** l'enregistrement du courant par le circuit de commande et d'évaluation se réalise pour des plaques de condensateur interconnectées du deuxième groupe de plaques de condensateur.

6.  Procédé selon l'une quelconque des revendications 1 à 5, **caractérisé en ce que** l'enregistrement du courant par le circuit de commande et d'évaluation se réalise pour des plaques de condensateur du deuxième groupe de plaques de condensateur, raccordées de manière appropriée aux plaques de condensateur du premier groupe de plaques de condensateur.

7.  Procédé selon l'une quelconque des revendications 1 à 6, **caractérisé en ce que** le débit volumique est directement déterminé à partir de la hauteur de l'interface du milieu, pour une interface basse du milieu.

8.  Procédé selon l'une quelconque des revendications 1 à 7, **caractérisé en ce que** la conductivité et/ou la constante diélectrique du milieu sont déterminées par le circuit de commande et d'évaluation.

9.  Appareil de mesure de débit volumique par induction magnétique, avec au moins trois plaques de condensateur (9 - 13) s'étendant au total pour l'essentiel sur la hauteur entière de la conduite (1) et avec un circuit de commande et d'évaluation (6), au moins deux, de préférence quatre plaques de condensateur (9 - 12) formant un premier groupe (7) de plaques de condensateur, au moins une plaque de condensateur (13) formant un deuxième groupe (8) de plaques de condensateur et le premier groupe (7) de plaques de condensateur et le deuxième groupe (8) de plaques de condensateur sont séparés l'un de l'autre par la verticale de la conduite (1), **caractérisé en ce qu'**à partir du circuit de commande et d'évaluation (6), une tension alternative peut être appliquée entre au moins une plaque de condensateur (9 - 12) du premier groupe (7) de plaques de condensateur et une plaque de condensateur (13) du deuxième groupe (8) de plaques de condensateur.

10. Appareil de mesure de débit volumique par induction selon la revendication 9, **caractérisé en ce que** la plaque de condensateur la plus basse (9) du premier groupe (7) de plaques de condensateur recouvre une hauteur plus faible que respectivement les autres plaques de condensateur (10 - 12) du premier groupe (7) de plaques de condensateur.

11. Appareil de mesure de débit volumique par induction magnétique selon la revendication 9 ou 10, **caractérisé en ce que** la largeur des plaques de condensateur (9 - 13) en fonction de la hauteur de la conduite (1) est toujours proportionnelle à la largeur de la conduite (1) à la hauteur respective.

12. Appareil de mesure de débit volumique par induction magnétique selon l'une quelconque des revendications 9 à 11, **caractérisé en ce que** les plaques de condensateur (9 - 13) sont enfouies au moins pour l'essentiel dans un habillage isolant de la conduite (1).

13. Appareil de mesure de débit volumique par induction magnétique selon la revendication 12, **caractérisé en ce qu'**une plaque de condensateur (9 - 12, 13) du premier groupe (7) de plaques de condensateur ou une du deuxième groupe de plaques de condensateur (8) se trouvant en contact avec le milieu servent à chaque fois d'électrodes de l'appareil de mesure de débit volumique par induction magnétique.

14. Appareil de mesure de débit volumique par induction magnétique selon l'une quelconque des revendications 9 à 13, **caractérisé en ce qu'**au moins deux, de préférence quatre plaques de condensateur forment le deuxième groupe (8) de plaques de condensateur.

15. Appareil de mesure de débit volumique par induction magnétique selon la revendication 14, **caractérisé en ce que**, le premier groupe (7) de plaques de condensateur et le deuxième groupe (8) de plaques de condensateur sont montés symétriquement par rapport à la verticale de la conduite (1).

16. Procédé pour exploiter un appareil de mesure de débit volumique par induction magnétique, l'appareil de mesure de débit volumique par induction magnétique présentant au moins trois plaques de condensateur (9 - 13) s'étendant au total pour l'essentiel sur la hauteur entière de la conduite (1) et un circuit de commande et d'évaluation (6), au moins deux, de préférence quatre plaques de condensateur (9 - 12) formant un premier groupe (7) de plaques de condensateur, au moins une plaque de condensateur (13) formant un deuxième groupe (8) de plaques de condensateur et le premier groupe (7) de plaques de condensateur et le deuxième groupe (8) de plaques de condensateur étant séparés l'un de l'autre par la verticale de la conduite (1), **caractérisé en ce qu'**à partir du circuit de commande et d'évaluation (6), une tension alternative est appliquée entre au moins une plaque de condensateur (9 - 12) du premier groupe (7) de plaques de condensateur et une plaque de condensateur (13) du deuxième groupe (8) de plaques de condensateur, à partir du circuit de commande et d'évaluation (6), le courant est enregistré successivement entre les plaques de condensateur individuelles (9 - 12) du premier groupe (7) de plaques de condensateur et au moins une plaque de condensateur (13) du deuxième groupe (8) de plaques de condensateur et à partir du circuit de commande et d'évaluation (6), le courant de la plaque de condensateur (10 - 12) la plus haute atteinte par l'interface du milieu du premier groupe (7) de plaques de condensateur, est normé à l'aide du courant d'une plaque de condensateur (9 - 11) se trouvant plus bas du premier groupe (7) de plaques de condensateur, ou à l'aide de la somme des courants des plaques de condensateur (9 - 11) se trouvant plus bas, du premier groupe (7) de plaques de condensateur, de sorte qu'à partir du circuit de commande et d'évaluation (6) le courant normé de la plaque de condensateur (10 - 12) la plus haute atteinte par l'interface du milieu, du premier groupe (7) de plaques de condensateur, est évalué en tant que mesure de la position de l'interface du milieu par rapport à la plaque de condensateur (10 - 12) la plus haute atteinte par l'interface du milieu du premier groupe (7) de plaques de condensateur.

Fig. 1

Fig. 2

Fig. 3

Fig. 4

Fig. 5